# EUROPEAN PATENT APPLICATION

(11) **EP 4 841 923 A1**
(43) Date of publication of application: **18.11.2026**
(21) Application number: 24925554.8
(22) Date of filing: 28.10.2024
(51) Int. Cl.: H04L 5/00

(54) **COMMUNICATION METHOD AND APPARATUS**

(30) Priority: 19.02.2024 CN 202410188115
(71) Applicant: Huawei Technologies Co., Ltd., Shenzhen, Guangdong 518129 (CN)
(72) Inventor: XU, Rui, Shenzhen, Guangdong 518129 (CN); QIN, Yi, Shenzhen, Guangdong 518129 (CN); PANG, Xu, Shenzhen, Guangdong 518129 (CN); CAO, Youlong, Shenzhen, Guangdong 518129 (CN)
(74) Representative: Pfenning, Meinig & Partner mbB
(86) International application number: PCT/CN2024/127740
(87) International publication number: WO 2025/175816

(57) **Abstract**

Embodiments of this application provide a communication method and apparatus to meet higher transmission requirements of services. In the method, when it is determined to multiplex first data of a first logical channel into a media access control protocol data unit MAC PDU, a first communication apparatus determines, based on a synchronization association between the first logical channel and a second logical channel, to multiplex second data of the second logical channel into the MAC PDU. In this way, data with synchronization requirements across logical channels can be synchronously transmitted to the greatest extent, thereby meeting higher transmission requirements of services.

## Description

This application claims priority to Chinese Patent Application No. 202410188115.1, filed with the China National Intellectual Property Administration on February 19, 2024 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

With the continuous development of 5th generation (5G) communication systems, data transmission delay has been continuously reduced, and transmission capacity has been greatly increased. Consequently, 5G communication systems are increasingly supporting multimedia services with stringent real-time requirements and high data capacity requirements, such as video transmission, cloud gaming (cloud gaming, CG), and extended reality (extended reality, XR), where XR includes virtual reality (virtual reality, VR), augmented reality (augmented reality, AR), and the like.

As a new service, a multi-modal service built upon XR by adding a tactile experience, enabling remote touch and remote control, and supporting remote perception across multiple senses including vision, hearing, touch, and kinesthesia. The multi-modal service has broad development prospects in related fields such as industrial automation, healthcare, and distance education, providing users with a comprehensive interactive experience with significant application value and commercial potential.

It may be seen that the multi-modal service includes a plurality of data forms such as audio, video, and tactile, imposing higher requirements on current network transmission. However, existing network capabilities may not fully meet the transmission requirements of the multi-modal service.

### SUMMARY

Embodiments of this application provide a communication method and apparatus to meet higher transmission requirements of services.

To achieve the foregoing objective, this application uses the following technical solutions.

According to a first aspect, a communication method is provided. The method may be performed by a communication apparatus, or may be performed by a module (for example, a processor, a chip, or a chip system) applied to a first communication apparatus, or may be implemented by a logical node, a logical module, or software that can implement all or some functions of the communication apparatus. For ease of description, the following uses an example in which the method is performed by the first communication apparatus for description. The method includes: when it is determined to multiplex first data of a first logical channel into a media access control protocol data unit MAC PDU, determining, based on a synchronization association between the first logical channel and a second logical channel, to multiplex second data of the second logical channel into the MAC PDU; and transmitting the MAC PDU.

It can be learned from the method according to the first aspect that, data that is synchronously transmitted is preferentially placed in the MAC PDU. For example, the first logical channel is synchronously associated with the second logical channel. After the first data of the first logical channel is multiplexed into the MAC PDU, the second data of the second logical channel is multiplexed into the MAC PDU, so that the first data and the second data that have a synchronization requirement can be transmitted in one MAC PDU to the greatest extent, instead of being divided into a plurality of MAC PDUs. In this way, data that has a synchronous transmission requirement can be transmitted to the greatest extent, to meet a higher service transmission requirement, such as a synchronous transmission requirement.

In a possible design solution, the method according to the first aspect further includes: The synchronization association between the first logical channel and the second logical channel is determined based on received configuration information. The configuration information may be from a second communication apparatus. The configuration information indicates that there is the synchronization association between the first logical channel and the second logical channel, to implement dynamic configuration, and a synchronization association relationship between logical channels may be more flexible. Alternatively, the synchronization association between the first logical channel and the second logical channel may be preconfigured or predefined in a protocol locally in the communication apparatus, to avoid communication overheads caused by configuration.

In a possible design solution, the method according to the first aspect further includes: The first data and the second data are data that needs to be transmitted synchronously.

Optionally, the first logical channel is synchronously associated with the second logical channel based on the fact that data of a first service and data of a second service need to be synchronously transmitted. The data of the first service is carried by the first logical channel, the data of the first service includes the first data, the data of the second service is carried by the second logical channel, and the data of the second service includes the second data. In other words, a synchronization association between logical channels may also be dynamically determined based on a service requirement, to meet service requirements in different scenarios.

Optionally, a priority of the first logical channel is higher than a priority of the second logical channel, or the priority of the second logical channel may be higher than the priority of the first logical channel. Specific implementation is not limited.

Optionally, a data volume of the second data is less than or equal to a data volume upper limit, and the data volume upper limit is a data volume of data, on the second logical channel, that is capable of being multiplexed into the MAC PDU at most, to avoid impact on transmission of another logical channel due to an excessively large volume of data, on the second logical channel, that is multiplexed into the MAC PDU.

According to a second aspect, a communication method is provided. The method may be performed by a first communication apparatus, or may be performed by a module (for example, a processor, a chip, or a chip system) applied to the first communication apparatus, or may be implemented by a logical node, a logical module, or software that can implement all or some functions of the communication apparatus. For ease of description, the following uses an example in which the method is performed by the first communication apparatus for description. The method includes: determining, based on a first duration, a priority for multiplexing a logical channel into a MAC PDU, where the shorter the first duration, the higher the priority for multiplexing the logical channel into the MAC PDU; and transmitting the MAC PDU based on the priority for multiplexing the logical channel into the MAC PDU.

It can be learned from the method according to the first aspect that, the first communication apparatus dynamically adjusts, based on the first duration, a priority of a logical channel on which data is located, so that a priority of a logical channel on which data with a shorter first duration is located is higher, and the data can be multiplexed into the MAC PDU as soon as possible. In this way, data that has a synchronization requirement can be transmitted synchronously, to meet a higher service requirement.

In a possible design solution, the method according to the first aspect further includes: The first duration is a minimum synchronous scheduling delay of data on the logical channel. The minimum synchronous scheduling delay may be understood as duration from waiting for transmission of data on the logical channel to expiration of synchronization transmission. For example, a duration threshold for synchronous transmission between the data (denoted as first data) on the logical channel (denoted as a logical channel #1) and data (denoted as second data) that needs to be synchronized on another logical channel (denoted as a logical channel #2) is 15 ms. This means that after transmission of the second data starts, transmission of the first data needs to start within 15 ms. Otherwise, if the first data is not transmitted within 15 ms, the first data cannot be synchronized with the second data. Therefore, when the second data starts to be transmitted and the first data does not start to be transmitted, the first communication apparatus may start a timer #1, set timing duration of the timer #1 to 15 ms, and count down the 15 ms, to calculate a time difference #1 remaining from current time to 15 ms. The time difference #1 is the minimum synchronous scheduling delay. Then, when the first data starts to be transmitted, the first communication apparatus stops the timer. It may be learned that, as the timer #1 keeps timing, the time difference #1 becomes shorter, which means that transmission of the first data becomes increasingly urgent. In this case, a priority of the logical channel #1 is continuously increased, so that the first data can be assembled into the MAC PDU earlier, and the first data is transmitted to the greatest extent before the timer #1 expires, to meet a synchronization requirement.

For another example, a duration threshold for synchronous transmission between the data (denoted as first data) on the logical channel (denoted as a logical channel #1) and data (denoted as second data) that needs to be synchronized on another logical channel (denoted as a logical channel #2) is 15 ms. This may further mean that after the second data is successfully transmitted, the first data needs to be transmitted within 15 ms. Otherwise, if the first data is not transmitted within 15 ms, the first data cannot be synchronized with the second data. Therefore, when the second data is successfully transmitted and the first data does not start to be transmitted, the first communication apparatus may start a timer #1, set timing duration of the timer #1 to 15 ms, and count down the 15 ms, to calculate a time difference #1 remaining from the current time to 15 ms. The time difference #1 is the minimum synchronous scheduling delay. Then, when the first data starts to be transmitted, the first communication apparatus stops the timer. It may also be learned that, as the timer #1 keeps timing, the time difference #1 becomes shorter, which means that transmission of the first data becomes increasingly urgent. In this case, a priority of the logical channel #1 is continuously increased, so that the first data can be assembled into the MAC PDU earlier, and the first data is transmitted to the greatest extent before the timer #1 expires, to meet a synchronization requirement.

For still another example, it is agreed that the data (denoted as first data) on the logical channel (denoted as a logical channel #1) needs to be transmitted at a moment TI. Timing duration of a timer #1 is set to countdown from the moment T1, to calculate a current remaining time difference #1 from the moment T1. The time difference #1 is the minimum synchronous scheduling delay. Then, when the first data starts to be transmitted, the first communication apparatus stops the timer. In other words, it is agreed that the data (denoted as first data) on the logical channel (denoted as a logical channel #1) needs to be transmitted to a second communication apparatus at a moment T1. Timing duration of a timer #1 is set to countdown from the moment T1, to calculate a current remaining time difference #1 from the moment T1. The time difference #1 is the minimum synchronous scheduling delay. Then, when the first data starts to be transmitted to the second communication apparatus, the first communication apparatus stops the timer. The moment T1 may also be any other agreed moment. This is not specifically limited. The agreed moment may be from the second communication apparatus, or may be preconfigured or predefined in a protocol locally in the first communication apparatus. This is not specifically limited. It may also be learned that, as the timer #1 keeps timing, the time difference #1 becomes shorter, which means that transmission of the first data becomes increasingly urgent. In this case, a priority of the logical channel #1 is continuously increased, so that the first data can be assembled into the MAC PDU earlier, and the first data is transmitted to the greatest extent before the timer #1 expires, to meet a synchronization requirement.

In addition, the foregoing manner of timing by using the timer #1 is merely an example, and may be alternatively implemented in another manner. A manner in which the first communication apparatus determines the minimum synchronous scheduling delay is not limited in this embodiment of this application.

In a possible design solution, the method according to the first aspect further includes: The first duration is a smaller value between a minimum synchronous scheduling delay and a minimum remaining scheduling delay of data on the logical channel. For the minimum synchronous scheduling delay, refer to the foregoing understanding. Details are not described herein again. The minimum remaining scheduling delay may be understood as duration from waiting for transmission to packet loss of the first data of the logical channel #1. For example, packet loss duration is 10 ms, which means that the first data is placed on the logical channel #1 and waits for transmission. The first communication apparatus may start a timer #2, set timing duration of the timer #2 is to 10 ms, and count down the 10 ms, to calculate a time difference #2 remaining from current time to 10 ms. The time difference #2 is the minimum remaining scheduling delay. Then, when the first data starts to be transmitted, the first communication apparatus stops the timer #2. It may be learned that, as the timer #2 keeps timing, the time difference #2 becomes shorter, which means that transmission of the first data becomes increasingly urgent. In this case, a shorter one of the time difference #1 and the time difference #2 determines a priority of the logical channel #1. In other words, the first communication apparatus not only needs to meet a synchronous transmission requirement to the greatest extent, but also needs to avoid packet loss.

It may be understood that the foregoing manner of timing by using the timer #2 is merely an example, and may be alternatively implemented in another manner. A manner in which the first communication apparatus determines the minimum remaining scheduling delay is not limited in this embodiment of this application.

Optionally, if the logical channel has a higher priority, the logical channel has a higher priority for being multiplexed into the MAC PDU.

Optionally, the configuration information is received, and the configuration information is used to configure a maximum volume of data to be synchronously transmitted on the logical channel, to avoid impact on transmission of another logical channel due to an excessively large volume of data multiplexed by a second logical channel into the MAC PDU.

According to a third aspect, a communication apparatus is provided. The communication apparatus includes modules configured to perform the method according to the first aspect, for example, a transceiver module and a processing module. The processing module configured to: when it is determined to multiplex first data of a first logical channel into a media access control protocol data unit MAC PDU, determine, based on a synchronization association between the first logical channel and a second logical channel, to multiplex second data of the second logical channel into the MAC PDU. The transceiver module is configured to transmit the MAC PDU.

In a possible design solution, the communication apparatus according to the third aspect may further include a transceiver. The transceiver may be a transceiver circuit or an interface circuit. The transceiver may be used by the communication apparatus according to the third aspect to communicate with another communication apparatus.

In a possible design solution, the communication apparatus according to the third aspect may further include a memory. The memory and a processor may be integrated together, or may be disposed separately. The memory may be configured to store a computer program and/or data related to the method according to the first aspect.

In embodiments of this application, the communication apparatus according to the third aspect may be the terminal according to the first aspect, or may be executed by a module (for example, a processor, a chip, or a chip system) applied to the terminal, or may be a logical node, a logical module, or software implementation that can implement all or some terminal functions. For ease of description, the following uses a terminal as an example for description.

It may be understood that, for technical effects of the apparatus according to the third aspect, refer to the related description according to the first aspect. Details are not described again.

According to a fourth aspect, a communication apparatus is provided. The communication apparatus includes modules configured to perform the method according to the second aspect, for example, a transceiver module and a processing module. The processing module is configured to determine, based on a first duration, a priority for multiplexing a logical channel into a MAC PDU, where the shorter the first duration, the higher the priority for multiplexing the logical channel into the MAC PDU. The transceiver module is configured to transmit the MAC PDU based on the priority for multiplexing the logical channel into the MAC PDU.

In a possible design solution, the communication apparatus according to the fourth aspect may further include a transceiver. The transceiver may be a transceiver circuit or an interface circuit. The transceiver may be used by the communication apparatus according to the fourth aspect to communicate with another communication apparatus.

In a possible design solution, the communication apparatus according to the fourth aspect may further include a memory. The memory and a processor may be integrated together, or may be disposed separately. The memory may be configured to store a computer program and/or data related to the method according to the first aspect.

In embodiments of this application, the communication apparatus according to the fourth aspect may be the terminal according to the first aspect, or may be executed by a module (for example, a processor, a chip, or a chip system) applied to the terminal, or may be a logical node, a logical module, or software implementation that can implement all or some terminal functions. For ease of description, the following uses a terminal as an example for description.

It may be understood that for technical effects of the apparatus according to the fourth aspect, refer to the related description according to the second aspect. Details are not described again.

According to a fifth aspect, a communication apparatus is provided. The communication apparatus includes a processor. The processor is coupled to a memory. The processor is configured to execute instructions stored in the memory, to enable the communication apparatus to perform the method according to any of the first aspect and the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In embodiments of this application, the communication apparatus according to the fifth aspect may be the network device according to any of the first aspect and the second aspect, a chip (system) or another part or component that may be disposed in the network device, or an apparatus including a network device.

In addition, for technical effects of the communication apparatus according to the fifth aspect, refer to the technical effects of the method according to any of the first aspect and the second aspect. Details are not described herein again.

According to a sixth aspect, a communication apparatus is provided. The communication apparatus includes a processor and a memory. The memory is configured to store instructions. When the processor executes the instructions, the communication apparatus is enabled to perform the method according to any of the first aspect and the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In embodiments of this application, the communication apparatus according to the sixth aspect may be the network device according to any of the first aspect and the second aspect, a chip (system) or another part or component that may be disposed in the network device, or an apparatus including a network device.

In addition, for technical effects of the communication apparatus according to the sixth aspect, refer to the technical effects of the method according to any of the first aspect and the second aspect. Details are not described herein again.

According to a seventh aspect, a chip is provided. The chip includes a controller and an interface circuit. The controller is configured to interact with another apparatus through the interface circuit, to perform the method according to any of the first aspect and the second aspect.

According to an eighth aspect, a communication system is provided. The communication system includes a terminal configured to perform the method according to the first aspect and a network device configured to perform the method according to the second aspect.

According to a ninth aspect, a computer-readable storage medium is provided. The computer-readable storage medium includes a computer program or instructions, and when the computer program or the instructions are run, the method according to the first aspect is performed.

According to a tenth aspect, a computer program product is provided, including a computer program or instructions, and when the computer program or the instructions are run, the method according to the first aspect is performed.

### BRIEF DESCRIPTION OF DRAWINGS

FIG. 1 is a first diagram of assembling a MAC PDU;
FIG. 2 is a second diagram of assembling a MAC PDU;
FIG. 3 is a first diagram of an architecture of a communication system according to an embodiment of this application;
FIG. 4 is a second diagram of an architecture of a communication system according to an embodiment of this application;
FIG. 5 is a first schematic flowchart of a communication method according to an embodiment of this application;
FIG. 6 is a second schematic flowchart of a communication method according to an embodiment of this application;
FIG. 7 is a first diagram of a structure of a communication apparatus according to an embodiment of this application; and
FIG. 8 is a second diagram of a structure of a communication apparatus according to an embodiment of this application.

### DESCRIPTION OF EMBODIMENTS

The technical solutions in embodiments of this application may be applied to various communication systems, for example, a wireless network (Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as 5.5G and a 6th generation (6th generation, 6G) mobile communication system. For ease of understanding technical solutions in embodiments of this application, technologies related to this application are first described briefly. The brief descriptions are as follows.
(1) Base station: The base station may be any device with a wireless transceiver function, and include but not limited to: an evolved NodeB (NodeB or eNB) in LTE, a gNodeB (gNodeB or gNB) or a transmission reception point (transmission reception point, TRP) in NR, a base station evolved in a subsequent 3GPP, an access node in a Wi-Fi system, a wireless relay node, a wireless backhaul node, and the like. The base station may be a macro base station, a micro base station, a pico base station, a small cell, a relay station, a balloon station, or the like.
(2) User equipment (UE): The user equipment may be a mobile phone (mobile phone), a tablet computer (Pad), a computer with a wireless transceiver function, a virtual reality (VR) terminal device, an augmented reality (AR) terminal device, a wireless terminal in industrial control (industrial control), a tactile terminal device, a vehicle-mounted terminal device, a wireless terminal in self driving, a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal, and the like.
(3) Logical channel: The logical channel is a virtual channel used to transmit control information and user data in a communication system, and is a logical connection established on a physical channel. Data may be transmitted and exchanged through the connection.
(4) Transmission channel: The transmission channel is used to define a manner and a feature of data transmission on an air interface. In actual application, a plurality of logical channels may multiplex a MAC protocol data unit (MAC PDU) of a same transmission channel, in other words, service data of a plurality of logical channels may be scheduled to a same transmission channel, and then transmitted by using through a physical channel.
(5) LCP (logical channel priority, logical channel priority): In a multiplexing communication system, different logical channels are assigned different priorities, to ensure that a channel with a higher priority can obtain a higher transmission priority when contending for a resource. Setting of the logical channel priority may be adjusted based on a requirement and a performance requirement of a communication system, to implement proper allocation and transmission of different types of data.
(6) Token bucket mechanism: The token bucket (token bucket) mechanism is used to limit data traffic of a communication device in a communication system within a specific bandwidth. In other words, a specific quantity of tokens are placed in a token bucket, and one token allows a specified volume of data to be sent. For example, one token is allowed to send a 1-byte data volume. Each time 1-byte data is transmitted, one token needs to be removed from the token bucket. When there is no token in the token bucket, any further sending of data with any size, is considered to be that the communication device exceeds a rated bandwidth. It may be understood that the token bucket is analogous to a water pool, and tokens are analogous to water. Tokens in the token bucket may not only be removed, but also be continuously added. To ensure that the communication device can continuously send data, tokens need to be continuously added to the token bucket.
(7) SDU (service data unit): The service data unit is a data set of a user service at a specified layer. When the SDU is passed to a receiver, data at a same protocol layer, that is, a service part, does not change. After being delivered to a lower layer, the SDU is encapsulated into a PDU for sending. The service data unit is an information unit passed from a higher layer protocol to a lower layer protocol. A service data unit (SDU) at the N^{th} layer corresponds to a protocol data unit (PDU) at a previous layer. The protocol data unit is delivered to a specified layer at a receiving end based on data in the protocol data unit.

PDU (protocol data unit): The protocol data unit is unit information exchanged between peer entities at different layers of a computer network. For example, a PDU at a TCP layer is a segment, and a PDU exchanged between application layers is application data (application data).

In brief, the SDU service data unit corresponds to data that is not processed at a specific sublayer. For a specific sublayer, the incoming data is an SDU. A PDU protocol data unit corresponds to data that is processed by the sublayer to form a specific format. For a specific sublayer, the outgoing data is a PDU.

(8) Remaining packet delay budget (packet delay budget): The remaining packet delay budget refers to a predetermined packet delay budget set by each user or base station in a wireless communication system to ensure real-time performance and reliability of data. This budget indicates maximum delay time allowed for a data packet during transmission. For the user, the remaining packet delay budget is set by user equipment or an application based on an actual requirement. The user may set the remaining packet delay budget based on a delay requirement of the user for data transmission. For example, for a real-time voice call application, the user may want to set a remaining packet delay budget to a small value, to ensure that voice data can be transmitted in time. For the base station, the remaining packet delay budget is configured by a network operator or a system administrator based on a network load and a quality of service requirement. The base station sets the remaining packet delay budget based on an actual network condition and a user requirement. For example, in high-load time, the base station may appropriately increase the remaining packet delay budget, to avoid packet loss and delay problems during data transmission.

The following uses an LCP process defined in a standard as an example to describe implementation of MAC layer multiplexing on a UE side.

A base station allocates uplink radio resources based on UE, and the UE determines specific radio bearer data can be put into the allocated radio resources. The UE needs to determine a total volume of data for each logical channel in a MAC protocol data unit (MAC PDU) included in a transmission channel, that is, to determine specific logical channel data to be put into and specific data to be placed on each logical channel.

There is only one MAC PDU, but a plurality of logical channels need multiplexing. Therefore, each logical channel needs to be allocated one priority. In this field, data of a logical channel with a first priority is preferentially included in the MAC PDU, followed by data of a logical channel with a second high priority, and the same procedure is performed for the remaining logical channels based on their priorities until the allocated MAC PDU is full.

In other words, in a process of sending service data, user equipment in a communication system needs to multiplex service data carried by an SDU located in the logical channel into the media access control protocol data unit MAC PDU.

In some implementations, a process of multiplexing, by a communication device, the service data carried by the SDU located in the logical channel into the MAC PDU may be performed based on the following principles.

Data of the logical channel is multiplexed into the MAC PDU in a descending order of logical channel priority.

For a logical channel that does not meet Bj>0, the SDU of the logical channel is not multiplexed into the MAC PDU, and then a next logical channel with a lower priority is processed.

For a logical channel that meets Bj>0, the SDU of the logical channel is multiplexed into the MAC PDU, and Bj of the logical channel is updated based on a data volume of the data multiplexed into the transmission channel in a target logical channel. Then, a next logical channel with a lower priority continues to be processed.

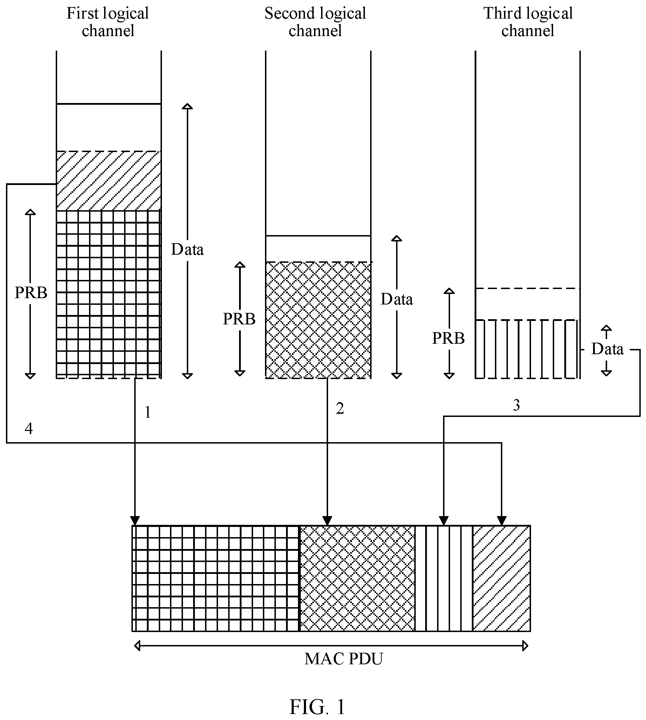

As shown in FIG. 1, the process of multiplexing the SDU of the logical channels into the MAC PDU is as follows.

When the SDU of the logical channel is multiplexed into the MAC PDU based on a priority of an existing logical channel, a case may occur. To be specific, if data of a first logical channel is synchronously associated with data of a third logical channel, but the existing logical channel is multiplexed into the MAC PDU based on a priority order, it is possible that the data of the second logical channel has occupied the MAC PDU, and data associated with the third logical channel and the first logical channel can only wait for a next MAC PDU.

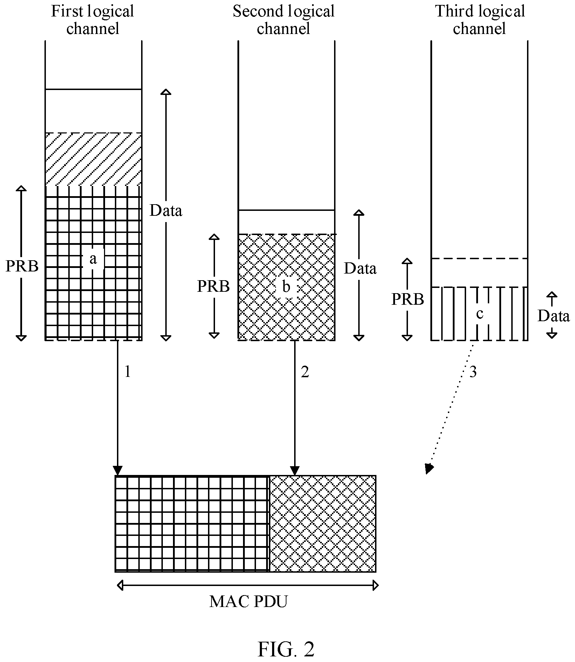

For example, in a multi-modal service, a simulated game involving audiovisual and tactile interactions may be used. Video data a may be placed on the first logical channel, control data b such as a webpage may be placed on the second logical channel, and tactile data c may be placed on the third logical channel. If a multiplexing order between the second logical channel and the third logical channel within the MAC PDU cannot be adjusted, a case shown in FIG. 2 may occur. Specifically, the video data a on the first logical channel and the control data b such as the webpage on the second logical channel may already occupy the entire MAC PDU. The video data a on the first logical channel is synchronously associated with the tactile data c on the third logical channel, and the tactile data c on the third logical channel cannot be simultaneously multiplexed into the MAC PDU. As a result, visual-tactile asynchronization occurs for a user, where an image shows that an object has been touched but no corresponding tactile sensation is provided to the user's hand, thereby severely affecting user experience.

For the foregoing technical problems, embodiments of this application provide the following technical solutions.

The following describes technical solutions of this application with reference to accompanying drawings.

In embodiments of this application, "indication" may include a direct indication and an indirect indication, or may include an explicit indication and an implicit indication. Information indicated by specific information is referred to as to-be-indicated information. In a specific implementation process, the to-be-indicated information may be indicated in a plurality of manners. By way of example but not limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periods and/or sending occasions of these pieces of sub-information may be the same or may be different. A specific sending method is not limited in embodiments of this application. The sending periods and/or the sending occasions of the sub-information may be predefined, for example, predefined according to a protocol, or may be configured by a transmitting end device by sending configuration information to a receiving end device.

In this application, "sending information" may be understood as that a device sends information to another device, or may be understood as that a logical module in the device sends information to another logical module. For example, "an access network device sends information" may be understood as that the access network device sends information to another device (for example, a terminal), or may be understood as that a logical module 1 in the access network device sends information to a logical module 2 in the access network device.

In this application, "receiving information" may be understood as that a device receives information from another device, or may be understood as that a logical module in the device receives information from another logical module. For example, "an access network device receives information" may be understood as that the access network device receives information from another device (for example, a terminal), or may be understood as that a logical module 1 in the access network device receives information from a logical module 2 in the access network device.

In this application, "sending information to... (for example, a terminal)" or a related illustration in the accompanying drawings may be understood as that a destination of the information is the terminal, and may include directly or indirectly sending the information to the terminal. "Receiving information from... (for example, a terminal)" or "receiving information that is from... (for example, a terminal)" or "receiving information sent by (for example, a terminal)" or a related illustration in the accompanying drawings may be understood as that a source of the information is the terminal, and may include directly or indirectly receiving information from the terminal. Information may undergo necessary processing, for example, a format change, between the source end for sending the information and the destination end. However, the destination end may understand valid information from the source end. Similar descriptions in this application may be understood similarly. Details are not described herein again.

In this application, "predefinition" or "preconfiguration" may be implemented by prestoring corresponding code or a corresponding table in a device, or may be implemented in another manner that may indicate related information. A specific implementation thereof is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to that of the protocol family, or a related protocol applied to a future communication system. This is not specifically limited in embodiments of this application.

In embodiments of this application, descriptions such as "when ...", "in a case of ...", and "if" all mean that a device performs corresponding processing in a specific objective situation, and are not intended to limit time. The descriptions do not mean that the device is required to have a determining action during implementation, and do not mean any other limitation.

In the descriptions of embodiments of this application, unless otherwise specified, the character "/" indicates that associated objects are in an "or" relationship. For example, A/B may represent A or B. The term "and/or" in embodiments of this application merely describes an association relationship between associated objects and indicates that three relationships may exist. For example, A and/or B may represent three cases: Only A exists, both A and B exist, or only B exists, where A and B may be singular or plural. In addition, in the descriptions of embodiments of this application, unless otherwise specified, "a plurality of" means two or more. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

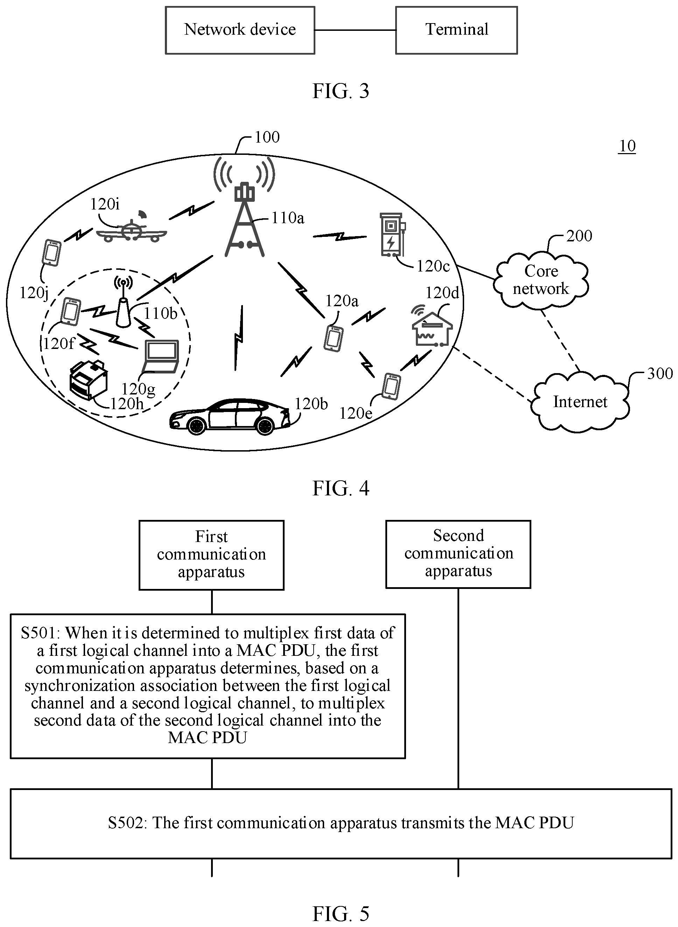

For ease of understanding embodiments of this application, a communication system is first used as an example to describe in detail a communication system applicable to embodiments of this application. For example, as shown in FIG. 3, the communication system mainly includes at least one of the following: a terminal and a network device.

For example, a possible and non-limiting architecture of the communication system may be shown in FIG. 4. As shown in FIG. 4, the communication system 10 includes a radio access network (radio access network, RAN) 100, a core network (core network, CN) 200, and an internet 300. The RAN 100 includes at least one RAN node (for example, 110a and 110b in FIG. 4, which are collectively referred to as 110) and at least one terminal (for example, 120a to 120j in FIG. 4, which are collectively referred to as 120). The RAN 100 may further include another RAN node, for example, a wireless relay device and/or a wireless backhaul device (not shown in FIG. 4). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a 3GPP-related cellular system, for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 may also be referred to as an access network device, a RAN entity, an access node, or the like sometimes, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, the network element 120i in FIG. 4 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. The RAN node 110 and the terminal 120 are both referred to as communication apparatuses sometimes. For example, the network elements 110a and 110b in FIG. 4 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 4), a micro base station or an indoor base station (for example, 110b in FIG. 4), a relay node or a donor node, or a radio controller in a CRAN scenario. Optionally, alternatively, the RAN node may be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or some functions of the RAN node.

In another possible scenario, a plurality of RAN nodes collaborate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

It may be understood that the RAN node may be a newly defined name, and the RAN node may further have different descriptions, such as an access node, a network device, and a radio access node. This is not limited. In this application, unless otherwise specified, a network device is used for description below.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A device form of the terminal is not limited in embodiments of this application.

The terminal or the network device may also be understood as a communication apparatus. A first communication apparatus mentioned below in embodiments of this application may be understood as a terminal, and a second communication apparatus may be understood as a network device. Alternatively, both the first communication apparatus and the second communication apparatus may be understood as terminals, or may be in a device form in another scenario. This is not limited.

The following further describes a communication method with reference to the accompanying drawings. It may be understood that in this application, an example in which the first communication apparatus and the second communication apparatus are used as execution bodies of the interaction example is used for illustration. However, this application does not limit execution bodies of the interaction example. For example, a method performed by the first communication apparatus and the second communication apparatus in this application may also be applied to a module (for example, a processor, a chip, or a chip system) of the communication apparatus, alternatively, or may be implemented by a logical node, a logical module, or software that can implement all or some functions of the communication apparatus.

With reference to the accompanying drawings, the following specifically describes an interaction procedure between communication apparatuses in the foregoing communication system by using method embodiments. The communication method provided in embodiments of this application is applicable to the foregoing communication system, and is specifically applied to various scenarios mentioned in the foregoing communication system. The following provides detailed descriptions.

FIG. 5 is a schematic flowchart of a communication method according to an embodiment of this application. The communication method is applicable to the foregoing communication system, and mainly relates to interaction between a first communication apparatus and a second communication apparatus.

As shown in FIG. 5, a procedure of the communication method is as follows.

S501: When it is determined to multiplex first data of a first logical channel into a MAC PDU, the first communication apparatus determines, based on a synchronization association between the first logical channel and a second logical channel, to multiplex second data of the second logical channel into the MAC PDU.

The first logical channel may be a logical channel that can bear service data, and specific service data carried by the first logical channel may be determined or indicated by a higher layer, for example, an application layer. Data of a first service is used as an example. The first data is the data of the first service, and the first data may be a PDU or a DRB. A specific data granularity is not limited.

The first data carried by the first logical channel is analyzed based on a characteristic of the data of the first service. Generally, it is considered that service data of the same type is mapped to a corresponding logical channel by default. Then, based on whether Bj of the logical channel meets a requirement that Bj is greater than 0, if Bj>0, the first data carried by the first logical channel is multiplexed into the MAC PDU.

Bj is a data variable of a token in a first logical channel token bucket, and the first communication apparatus maintains a token bucket and a parameter corresponding to the token bucket for each logical channel. Each token is used to transmit data of a specified data volume. In addition to a variable (Bj) of a quantity of tokens in the token bucket, the parameter corresponding to each token bucket includes a PBR, and a depth (bucket size duration, BSD) of the token bucket. The PBR and the BSD are configured by a (radio resource control, RRC) layer of a network device in the communication system. The variable (Bj) of the quantity of tokens in the token bucket is initialized to 0 when the logical channel is initially established, and then PBR*TTI is added in each TTI. The depth BSD of the token bucket is a maximum capacity of the token bucket, a maximum number of tokens that can be included, or a maximum volume of data that can be transmitted by the tokens in the token bucket. The BSD may be represented by time, for example, in a unit of second (s) or millisecond (ms). For example, BSD of a specific token bucket=100 ms. When PBR= 8k tokens/second, a quantity of tokens added every millisecond is 8. Therefore, the BSD of the token bucket=100 ms=0.1s, which is equivalent to PBR*0.1s=800 tokens, and is equal to 800 bytes. The BSD may be represented by time, and a value of the BSD may be a service period. PBR*BSD may be a data volume of a service in one period, and may ensure that a maximum capacity is a total data volume of one service period. A transmission time interval (transmission time interval, TTI) is described as follows. In the communication system, a communication device implements data exchange between a MAC layer and a physical layer based on the transmission time interval (transmission time interval, TTI). Transmission is performed once in each TTI, or each TTI corresponds to a transmission moment. The TTI may also be referred to as a scheduling period or a transmission period, namely, two adjacent transmission moments (transmission occasions and scheduling occasions). For example, the TTI may be 1 ms, 2 ms, 0.5 ms, or the like. It should be noted that in some mobile communication systems (for example, a 5G NR system), a TTI may change. It is assumed that the current first logical channel meets a condition Bj>0, and the first data of the first logical channel is multiplexed into the MAC PDU. Bj of the first logical channel is updated based on a data volume of data multiplexed into a transmission channel in the first logical channel, that is, Bj=Bj-Tsdu, where Tsdu is a quantity of tokens consumed by data multiplexed into the MAC PDU.

Alternatively, the second logical channel may be a logical channel that can bear data of a service, and the service may be different from the first service, or may be specifically determined or indicated by a higher layer. Data of a second service is used as an example. The second data is the data of the second service, and the second data may also be a PDU or a DRB. A specific data granularity is not limited.

The second data carried by the second logical channel is analyzed based on a characteristic of the data of the second service. Generally, it is considered that service data of the same type is mapped to a corresponding logical channel by default. Then, based on whether Bj of the logical channel meets a requirement that Bj is greater than 0, if Bj>0, the second data carried by the second logical channel is multiplexed into the MAC PDU.

Bj is a data variable of a token in a second logical channel token bucket, and the first communication apparatus maintains a token bucket and a parameter corresponding to the token bucket for each logical channel. Each token is used to transmit data of a specified data volume. In addition to a variable (Bj) of a quantity of tokens in the token bucket, the parameter corresponding to each token bucket includes a PBR, and a depth (bucket size duration, BSD) of the token bucket. The PBR and the BSD are configured by a (radio resource control, RRC) layer of a network device in the communication system. The variable (Bj) of the quantity of tokens in the token bucket is initialized to 0 when the logical channel is initially established, and then PBR*TTI is added in each TTI. The depth BSD of the token bucket is a maximum capacity of the token bucket, a maximum number of tokens that can be included, or a maximum volume of data that can be transmitted by the tokens in the token bucket. The BSD may be represented by time, for example, in a unit of second (s) or millisecond (ms). For example, BSD of a specific token bucket=100 ms. When PBR= 8k tokens/second, a quantity of tokens added every millisecond is 8. Therefore, the BSD of the token bucket=100 ms=0.1s, which is equivalent to PBR*0.1s=800 tokens, and is equal to 800 bytes. The BSD may be represented by time, and a value of the BSD may be a service period. PBR*BSD may be a data volume of a service in one period, and may ensure that a maximum capacity is a total data volume of one service period. A transmission time interval (transmission time interval, TTI) is described as follows. In the communication system, a communication device implements data exchange between a MAC layer and a physical layer based on the transmission time interval (transmission time interval, TTI). Transmission is performed once in each TTI, or each TTI corresponds to a transmission moment. The TTI may also be referred to as a scheduling period or a transmission period, namely, two adjacent transmission moments (transmission occasions and scheduling occasions). For example, the TTI may be 1 ms, 2 ms, 0.5 ms, or the like. It should be noted that in some mobile communication systems (for example, a 5G NR system), a TTI may change.

It is assumed that the current second logical channel meets a condition Bj>0, and the second data of the second logical channel is multiplexed into the MAC PDU. Bj of the first logical channel is updated based on a data volume of data multiplexed into a transmission channel in the second logical channel, that is, Bj=Bj-Tsdu, where Tsdu is a quantity of tokens consumed by data multiplexed into the MAC PDU.

The first data of the first logical channel and the second data of the second logical channel need to be encapsulated into a same MAC PDU to the greatest extent. According to the foregoing, the first logical channel and the second logical channel have the synchronization association. It may be understood that service data carried by the first logical channel and the second logical channel are synchronously associated, and the service data is data that has a synchronous transmission requirement.

In a possible manner, the synchronization association between the first logical channel and the second logical channel is determined based on received configuration information, and the configuration information indicates that there is the synchronization association between the first logical channel and the second logical channel, to implement dynamic configuration. The configuration information may be from the second communication apparatus. For example, the second communication apparatus (for example, the network device) may send, to the first communication apparatus on any possible occasion, any possible message that carries the configuration information. The configuration information may specifically indicate an identifier of the first logical channel and an identifier of the second logical channel, and indicate that there is the synchronization association between the first logical channel and the second logical channel. Alternatively, there may be another implementation. This is not specifically limited. Alternatively, the synchronization association between the first logical channel and the second logical channel is preconfigured or predefined in a protocol locally in the first communication apparatus, to avoid communication overheads caused by configuration.

In another possible manner, the first communication apparatus may further synchronously associate the first logical channel with the second logical channel based on that the data of the first service and the data of the second service need to be synchronously transmitted. The data of the first service is carried by the first logical channel, the data of the first service includes the first data, the data of the second service is carried by the second logical channel, and the data of the second service includes the second data. In other words, a synchronization association between logical channels may also be dynamically determined based on a service requirement, to meet service requirements in different scenarios. For example, both the first service and the second service are services provided by a higher layer application (such as video or audio software) of the first communication apparatus, and the higher layer application may indicate that the first service and the second service are synchronously associated. In this case, when the first communication apparatus allocates a first logical channel bearer to the data of the first service, and allocates a second logical channel bearer to the data of the first service, the first communication apparatus also synchronously associates the first logical channel with the second logical channel.

A sequence of encapsulating the first data of the first logical channel and the second data of the second logical channel into the MAC PDU is determined based on priorities of the first logical channel and the second logical channel. If the priority of the first logical channel is higher than the priority of the second logical channel, and current data of the first logical channel meets the condition Bj>0, the first data of the first logical channel is now multiplexed into the MAC PDU. Then, data of a logical channel that is synchronously associated is multiplexed into the MAC PDU based on the synchronization association, in other words, the second data of the second logical channel is multiplexed into the MAC PDU.

It should be noted that, the foregoing uses two logical channels that are synchronously associated as an example. There may be more logical channels, for example, two, three, or four logical channels having a synchronization association requirement. In addition, that the priority of the first logical channel is higher than the priority of the second logical channel is merely an example, or the priority of the second logical channel may be higher than the priority of the first logical channel.

In addition, there may be another logical channel that is not synchronously associated. The first communication apparatus encapsulates the data into the MAC PDU, preferentially processes a logical channel that is synchronously associated, and then encapsulates the data into the MAC PDU in a descending order of priorities of other logical channels that are not synchronously associated.

In this embodiment of this application, a data volume of the second data is less than or equal to a data volume upper limit, and the data volume upper limit is a data volume of data, on the second logical channel, that is capable of being multiplexed into the MAC PDU at most, to avoid impact on transmission of another logical channel due to an excessively large volume of data, on the second logical channel, that is multiplexed into the MAC PDU. It may be understood that, in information (for example, information from the second communication apparatus, where the information may indicate the data volume upper limit) preconfigured or received by the first communication apparatus, the data volume of the data, on the second logical channel, that can be multiplexed into the MAC PDU at most is set. When the data volume upper limit is exceeded, multiplexing of the data of the second logical channel into the MAC PDU is stopped.

For example, in a multi-modal service, a simulated game involving audiovisual and tactile interactions may be used. There are four logical channels: a logical channel #1, a logical channel #2, a logical channel #3, and a logical channel #4, and each logical channel meets Bj>0. In addition, the second communication apparatus is configured such that the logical channel #1 and the logical channel #3 are synchronously associated. Therefore, in a process of considering multiplexing data in a plurality of logical channels into the MAC PDU in a descending order of logical channel priorities, a synchronization association between logical channels need to be considered synchronously.

After first data (video data) of the logical channel #1 is multiplexed into the MAC PDU, because the logical channel #1 and the logical channel #3 are synchronously associated, in other words, the first data (video data) of the logical channel #1 and third data (tactile data) of the logical channel #3 need to be synchronously transmitted, the first data (video data) of the logical channel #1 and the third data (tactile data) of the logical channel #3 need to be multiplexed into a same MAC PDU. In this case, a priority of the logical channel #3 having the synchronization association is higher than a priority of the logical channel #2. To be specific, after the first data (video data) of the logical channel #1 is multiplexed into the MAC PDU, the third data (tactile data) of the logical channel #3 is multiplexed into the MAC PDU. Then, after the third data (tactile data) of the logical channel #3 that is synchronously associated is processed, second data (control data such as a webpage) of the logical channel #2 and fourth data (auditory data) of the logical channel #4 continue to be transmitted in a descending order of priorities.

It should be noted that, if there is more than one logical channel synchronously associated with the logical channel #1, logical channels that are synchronously associated are still traversed in a descending order.

It should further be noted that data, on the logical channel #3, that can be multiplexed into the MAC PDU has a data volume upper limit. For example, in the configuration information, the data, on the logical channel #3, that can be multiplexed into the MAC PDU has the data volume upper limit, which is set to 200 bits. Data that exceeds 200 bits can only be subsequently assembled based on an original priority sequence, and multiplexed into the MAC PDU.

S502: The first communication apparatus transmits the MAC PDU.

The first communication apparatus may transmit the MAC PDU to the second communication apparatus, or may transmit the MAC PDU to another communication apparatus. This is not specifically limited. When the first communication apparatus transmits the MAC PDU, the MAC PDU may be encapsulated in any possible message. This is not specifically limited.

In conclusion, data that is synchronously transmitted is preferentially placed in the MAC PDU. For example, the first logical channel is synchronously associated with the second logical channel. After the first data of the first logical channel is multiplexed into the MAC PDU, the second data of the second logical channel is multiplexed into the MAC PDU, so that data of logical channels that are synchronously associated can be transmitted in one MAC PDU to the greatest extent, instead of being divided into a plurality of MAC PDUs. In this way, the data that has a synchronous requirement can be transmitted to the greatest extent, to meet a higher service transmission requirement, such as a synchronous transmission requirement.

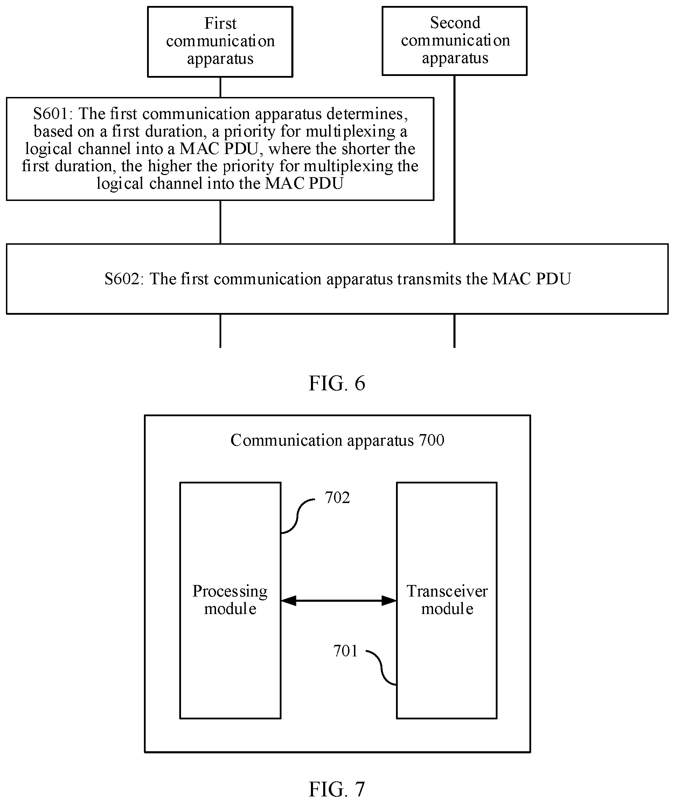

FIG. 6 is a second schematic flowchart of another communication method according to an embodiment of this application. The communication method is applicable to the foregoing communication system, and mainly relates to interaction between a first communication apparatus and a second communication apparatus.

As shown in FIG. 6, a procedure of the communication method is as follows.

S601: The first communication apparatus determines, based on a first duration, a priority for multiplexing a logical channel into a MAC PDU, where the shorter the first duration, the higher the priority for multiplexing the logical channel into the MAC PDU.

The first duration is a minimum synchronous scheduling delay of data on the logical channel. The minimum synchronous scheduling delay may be understood as duration from waiting for transmission of data on the logical channel to expiration of synchronization transmission. For example, a duration threshold for synchronous transmission between the data (denoted as first data) on the logical channel (denoted as a logical channel #1) and data (denoted as second data) that needs to be synchronized on another logical channel (denoted as a logical channel #2) is 15 ms. This means that after transmission of the second data starts, transmission of the first data needs to start within 15 ms. Otherwise, if the first data is not transmitted within 15 ms, the first data cannot be synchronized with the second data. Therefore, when the second data starts to be transmitted and the first data does not start to be transmitted, the first communication apparatus may start a timer #1, set timing duration of the timer #1 to 15 ms, and count down the 15 ms, to calculate a time difference #1 remaining from current time to 15 ms. The time difference #1 is the minimum synchronous scheduling delay. Then, when the first data starts to be transmitted, the first communication apparatus stops the timer.

For another example, a duration threshold for synchronous transmission between the data (denoted as first data) on the logical channel (denoted as a logical channel #1) and data (denoted as second data) that needs to be synchronized on another logical channel (denoted as a logical channel #2) is 15 ms. This may further mean that after the second data is successfully transmitted, the first data needs to be transmitted within 15 ms. Otherwise, if the first data is not transmitted within 15 ms, the first data cannot be synchronized with the second data. Therefore, when the second data is successfully transmitted and the first data does not start to be transmitted, the first communication apparatus may start a timer #1, set timing duration of the timer #1 to 15 ms, and count down the 15 ms, to calculate a time difference #1 remaining from the current time to 15 ms. The time difference #1 is the minimum synchronous scheduling delay. Then, when the first data starts to be transmitted, the first communication apparatus stops the timer.

For still another example, it is agreed that the data (denoted as first data) on the logical channel (denoted as a logical channel #1) needs to be transmitted at a moment TI. Timing duration of a timer #1 is set to countdown from the moment T1, to calculate a current remaining time difference #1 from the moment T1. The time difference #1 is the minimum synchronous scheduling delay. Then, when the first data starts to be transmitted, the first communication apparatus stops the timer. In other words, it is agreed that the data (denoted as first data) on the logical channel (denoted as a logical channel #1) needs to be transmitted to a second communication apparatus at a moment T1. Timing duration of a timer #1 is set to countdown from the moment T1, to calculate a current remaining time difference #1 from the moment T1. The time difference #1 is the minimum synchronous scheduling delay. Then, when the first data starts to be transmitted to the second communication apparatus, the first communication apparatus stops the timer. The moment T1 may also be any other agreed moment. This is not specifically limited. The agreed moment may be from the second communication apparatus, or may be preconfigured or predefined in a protocol locally in the first communication apparatus. This is not specifically limited.

In addition, the foregoing manner of timing by using the timer #1 is merely an example, and may be alternatively implemented in another manner. A manner in which the first communication apparatus determines the minimum synchronous scheduling delay is not limited in this embodiment of this application.

The first data and the second data are data of a same granularity, for example, an SDU, a PDU, or a DRB. A specific granularity of the data is not limited, and is not specifically limited.

That the first data and the second data need to be synchronously transmitted is determined based on received configuration information, and the configuration information indicates that the first data and the second data need to be synchronously transmitted, to implement dynamic configuration of a logical channel on which data is located. The configuration information may be from the second communication apparatus. For example, the second communication apparatus (for example, the network device) may send, to the first communication apparatus on any possible occasion, any possible message that carries the configuration information. The configuration information may specifically indicate an identifier of the first data and an identifier of the second data, and indicate that the first data and the second data need to be synchronously transmitted. Alternatively, there may be another implementation. This is not specifically limited. Alternatively, that the first data and the second logical data need to be synchronously transmitted is preconfigured or predefined in a protocol locally in the first communication apparatus, to avoid communication overheads caused by configuration.

If a logical channel on which the first data and the second data are located meets a requirement Bj>0 and the second data and the first data need to be synchronously transmitted, the second data starts to be transmitted and is multiplexed into the MAC PDU. The first data is the shortest synchronous scheduling delay obtained based on the timer #1, and then the second data is multiplexed into the MAC PDU.

It should be noted that, if there is more than one piece of data that has a synchronous transmission requirement limitation with the second data, the data that has a synchronous transmission requirement is traversed in an order from a short first duration to a long first duration.

Further, the logical channel receives the configuration information, where the configuration information is used to configure a maximum volume of data to be synchronously transmitted on the logical channel. It may be understood that, in information (for example, information from the second communication apparatus, where the information may indicate a data volume upper limit) preconfigured or received by the first communication apparatus, a data volume of data, on the second logical channel, that can be multiplexed into the MAC PDU at most is set. When the data volume upper limit is exceeded, multiplexing of the data of the second logical channel into the MAC PDU is stopped. For example, the first data and the second data are two services. Data of a second service is 1000 bytes, and it can be learned from the configuration information that data of a first service that has a synchronous transmission requirement with the second service is 3000 bytes. In other words, during single MAC PDU assembly transmission, only 3000 bytes of the data of the first service may be assembled into the MAC PDU.

For example, there are three pieces of service data: service data #1 (video data), service data #2 (control data such as a webpage), and service data #3 (tactile data), and each logical channel meets Bj>0. In addition, the second communication apparatus is configured such that the service data #1 and the service data #3 are synchronously associated. A duration threshold of synchronous transmission between the service data #1 and the service data #3 is 15 ms. After the service data #1 starts to be transmitted, the service data #3 needs to be transmitted within 10 ms. Otherwise, if the service data #3 is not transmitted within 15 ms, the service data #3 cannot be synchronized with the service data #1. When the service data #1 starts to be transmitted, and the service data #3 does not start to be transmitted, the first communication apparatus may start the timer #1, set timing duration of the timer #1 to 10 ms, and count down the 10 ms, to calculate a time difference #1 remaining from current time to 10 ms. At a current moment, the time difference #1 obtained from the timer #1 is the minimum synchronous scheduling delay, that is, the first duration. After the service data #1 is multiplexed into the MAC PDU, because the service data #1 and the service data #3 need to be transmitted synchronously, the service data #1 needs to be multiplexed into the same MAC PDU. A priority of a logical channel on which the service data #3 is located is adjusted based on the first duration. After the service data #1 is multiplexed into the MAC PDU, the service data #3 is multiplexed into the MAC PDU. Then, the service data #2 is multiplexed into the MAC PDU.

It should further be noted that, data, of the service data #3, that may be multiplexed into the MAC PDU has a data volume upper limit. For example, in configuration information configured by the second communication apparatus, data, of the service data #3, that can be multiplexed into the MAC PDU has a data volume upper limit, which is set to 3000 bytes. Data that exceeds 3000 bytes can only be subsequently assembled based on a priority of a logical channel where the data is located, and multiplexed into the MAC PDU.

In this embodiment of this application, the first duration may alternatively be a smaller value between a minimum synchronous scheduling delay and a minimum remaining scheduling delay of data on a logical channel. For the minimum synchronous scheduling delay, refer to the foregoing understanding. Details are not described herein again. The minimum remaining scheduling delay may be understood as duration from waiting for transmission to packet loss of the first data of the logical channel #1. For example, packet loss duration is 10 ms, which means that the first data is placed on the logical channel #1 and waits for transmission. The first communication apparatus may start a timer #2, set timing duration of the timer #2 is to 10 ms, and count down the 10 ms, to calculate a time difference #2 remaining from current time to 10 ms. The time difference #2 is the minimum remaining scheduling delay. Then, when the first data starts to be transmitted, the first communication apparatus stops the timer #2. It may be learned that, as the timer #2 keeps timing, the time difference #2 becomes shorter, which means that transmission of the first data becomes increasingly urgent. In this case, a shorter one of the time difference #1 and the time difference #2 determines a priority of the logical channel #1. In other words, the first communication apparatus not only needs to meet a synchronous transmission requirement to the greatest extent, but also needs to avoid packet loss.

It may be understood that the foregoing manner of timing by using the timer #2 is merely an example, and may be alternatively implemented in another manner. A manner in which the first communication apparatus determines the minimum remaining scheduling delay is not limited in this embodiment of this application.

It may be understood that the remaining scheduling delay is a remaining packet delay budget (packet delay budget) in the conventional technology. In a wireless communication system, to ensure real-time performance and reliability of data, each user or base station sets a predetermined packet delay budget. A specific manner of setting the packet delay budget is not specifically limited. This budget indicates maximum delay time allowed for a data packet during transmission. For the user, the remaining packet delay budget is set by user equipment or an application based on an actual requirement. The user may set the remaining packet delay budget based on a delay requirement of the user for data transmission. For example, for a real-time voice call application, the user may want to set a remaining packet delay budget to a small value, to ensure that voice data can be transmitted in time. For the base station, the remaining packet delay budget is configured by a network operator or a system administrator based on a network load and a quality of service requirement. The base station sets the remaining packet delay budget based on an actual network condition and a user requirement. For example, in high-load time, the base station may appropriately increase the remaining packet delay budget, to avoid packet loss and delay problems during data transmission. In a real-time system, a packet is dropped if time for which a task or a process waits to be scheduled for execution exceeds the remaining scheduling delay.

In addition, the first duration is a minimum value of the minimum synchronous scheduling delay and the minimum remaining scheduling delay of the data on the logical channel, and is similar to a specific execution step in which the first duration is the minimum synchronous scheduling delay of the data of the logical channel. For understanding, refer to this. Details are not described herein again.

S602: The first communication apparatus transmits the MAC PDU.

The first communication apparatus may transmit the MAC PDU to the second communication apparatus, or may transmit the MAC PDU to another communication apparatus. This is not specifically limited. When the first communication apparatus transmits the MAC PDU, the MAC PDU may be encapsulated in any possible message. This is not specifically limited.

In conclusion, in the communication method, the first communication apparatus determines, based on the first duration, the priority for multiplexing the logical channel into the MAC PDU. If the first duration is shorter, the priority for multiplexing the logical channel into the MAC PDU is higher. In addition to a case in which a logical channel has a synchronization requirement, a transmission time difference limit of a logical channel having a synchronization requirement and a time limit in which a packet may be dropped are also considered, in other words, the first duration of the logical channel having a synchronization requirement is considered. This can better implement transmission of data having a synchronization requirement, and improve multi-modal user experience.

FIG. 7 is a first diagram of a structure of a communication apparatus according to an embodiment of this application. For example, as shown in FIG. 7, the communication apparatus 700 includes a transceiver module 701 and a processing module 702. For ease of description, FIG. 7 shows only main components of the communication apparatus.

The transceiver module 701 is configured to perform a transceiving function of the foregoing communication method, and the processing module 702 is configured to perform another function other than the transceiving function of the foregoing communication method.

Optionally, the transceiver module 701 may include a sending module (not shown in FIG. 7) and a receiving module (not shown in FIG. 7). The sending module is configured to implement a sending function of the communication apparatus 700, and the receiving module is configured to implement a receiving function of the communication apparatus 700.

Optionally, the communication apparatus 700 may further include a storage module (not shown in FIG. 7), and the storage module stores a program or instructions. When the processing module 702 executes the program or the instructions, the communication apparatus 700 is enabled to perform the function of the terminal in the method shown in FIG. 5 or FIG. 6 in the foregoing method.

It may be understood that the communication apparatus 700 may be a terminal or a network device, may be a chip (system) or another part or component that may be disposed in a terminal or a network device, or may be an apparatus that includes a terminal or a network device. This is not limited in this application.

In addition, for technical effects of the communication apparatus 700, refer to the technical effects of the method shown in FIG. 5 or FIG. 6. Details are not described herein again.

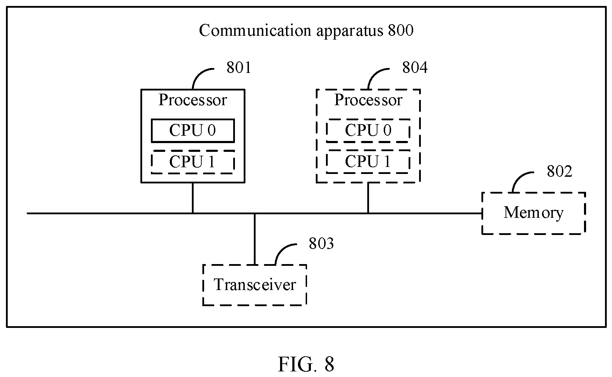

The following describes each component of a communication apparatus 800 in detail with reference to FIG. 8.

A processor 801 is a control center of the communication apparatus 800, and may be one processor, or may be a general term of a plurality of processing elements. For example, the processor 801 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 801 may perform various functions of the communication apparatus 800 by running or executing a software program stored in a memory 802 and invoking data stored in the memory 802, for example, perform the communication method shown in embodiments of this application.

During specific implementation, in an embodiment, the processor 801 may include one or more CPUs, for example, a CPU 0 and a CPU 1 shown in FIG. 8.

During specific implementation, in an embodiment, the communication apparatus 800 may alternatively include a plurality of processors, for example, the processor 801 and a processor 804 shown in FIG. 8. Each of the processors may be a single-core processor (single-CPU), or may be a multi-core processor (multi-CPU). The processor herein may be one or more devices, circuits, and/or processing cores configured to process data (for example, computer program instructions).

The memory 802 is configured to store a software program for executing the solutions in this application, and the processor 801 controls execution. For a specific implementation, refer to the foregoing method embodiments. Details are not described herein.

Optionally, the memory 802 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The memory 802 may be integrated with the processor 801, or may exist independently and is coupled to the processor 801 through an interface circuit (not shown in FIG. 8) of the communication apparatus 800. This is not specifically limited in embodiments of this application.

A transceiver 803 is configured to communicate with another communication apparatus. For example, the communication apparatus 800 is a terminal, and the transceiver 803 may be configured to communicate with a network device or communicate with another terminal device. For another example, the communication apparatus 800 is a network device, and the transceiver 803 may be configured to communicate with a terminal or communicate with another network device.

Optionally, the transceiver 803 may include a receiver and a transmitter (not separately shown in FIG. 8). The receiver is configured to implement a receiving function, and the transmitter is configured to implement a sending function.

Optionally, the transceiver 803 may be integrated with the processor 801, or may exist independently and is coupled to the processor 801 through an interface circuit (not shown in FIG. 8) of the communication apparatus 800. This is not specifically limited in embodiments of this application.

It may be understood that the structure of the communication apparatus 800 shown in FIG. 8 does not constitute a limitation on the communication apparatus. An actual communication apparatus may include more or fewer components than those shown in the figure, or combine some components, or have different component arrangements.

In addition, for technical effects of the communication apparatus 800, refer to the technical effects of the methods in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
when it is determined to multiplex first data of a first logical channel into a media access control protocol data unit MAC PDU, determining, based on a synchronization association between the first logical channel and a second logical channel, to multiplex second data of the second logical channel into the MAC PDU; and
transmitting the MAC PDU.

2. The method according to claim 1, wherein the synchronization association between the first logical channel and the second logical channel is determined based on received configuration information, and the configuration information indicates that the first logical channel and the second logical channel have the synchronization association.

3. The method according to claim 1, wherein the first data and the second data are data to be transmitted synchronously.

4. The method according to claim 3, wherein the method comprises:
synchronously associating the first logical channel with the second logical channel based on the fact that data of a first service and data of a second service need to be synchronously transmitted, wherein the data of the first service is carried by the first logical channel, the data of the first service comprises the first data, the data of the second service is carried by the second logical channel, and the data of the second service comprises the second data.

5. The method according to any one of claims 1 to 4, wherein a priority of the first logical channel is higher than a priority of the second logical channel.

6. The method according to any one of claims 1 to 5, wherein a volume of the second data is less than or equal to a data volume upper limit, and the data volume upper limit is a maximum data volume of data, on the second logical channel, that is capable of being multiplexed into the MAC PDU.

7. A communication method, wherein the method comprises:
determining, based on a first duration, a priority for multiplexing a logical channel into a MAC PDU, wherein the shorter the first duration, the higher the priority for multiplexing the logical channel into the MAC PDU; and
transmitting the MAC PDU based on the priority for multiplexing the logical channel into the MAC PDU.

8. The method according to claim 7, wherein the first duration is a minimum synchronous scheduling delay of data on the logical channel.

9. The method according to claim 7, wherein the first duration is a smaller value between a minimum synchronous scheduling delay and a minimum remaining scheduling delay of data on the logical channel.

10. The method according to any one of claims 7 to 9, wherein if the logical channel has a higher priority, the logical channel has a higher priority for being multiplexed into the MAC PDU.

11. The method according to any one of claims 7 to 10, wherein the logical channel receives configuration information, and the configuration information is used to configure a maximum volume of data to be synchronously transmitted on the logical channel.

12. A communication apparatus, comprising a module configured to perform the method according to any one of claims 1 to 6, or to perform the method according to any one of claims 7 to 11.

13. A communication apparatus, wherein the apparatus comprises a processor, the processor is coupled to a memory, the memory is configured to store instructions, and when the processor executes the instructions, the apparatus is enabled to perform the method according to any one of claims 1 to 6, or to perform the method according to any one of claims 7 to 11.

14. A computer-readable storage medium, wherein the computer-readable storage medium stores a computer program or instructions, and when the computer program or the instructions are run, the method according to any one of claims 1 to 6 is performed, or the method according to any one of claims 7 to 11 is performed.

15. A computer program product, comprising a computer program or instructions, wherein when the computer program or the instructions are run, the method according to any one of claims 1 to 6 is performed, or the method according to any one of claims 7 to 11 is performed.
